# EUROPÄISCHE PATENTANMELDUNG

(11) **EP 1 284 158 A2**
(43) Veröffentlichungstag der Anmeldung: **19.02.2003**
(21) Anmeldenummer: 02405671.5
(22) Anmeldetag: 07.08.2002
(51) Int. Cl.: B01J 19/00

(54) **Mikrosensor-System zur Überwachung von biologischen und chemischen Prozessen**

(30) Priorität: 07.08.2001 DE 10137954
(71) Anmelder: Eidgenössische Technische Hochschule Zürich, 8093 Zürich (CH)
(72) Erfinder: Brand, Oliver, 8620 Wetzikon (CH); Held, Martin, 8003 Zürich (CH); Hierlemann, Andreas, 8049 Zürich (CH); Lange Dirk, Menlo Park, CA 94025-4860 (US)
(74) Vertreter: Barth, Carl Otto, Dipl.-Ing.

(57) **Zusammenfassung**

Ein System zur Beobachtung oder Überwachung von biologischen und chemischen Prozessen in einer Mehrzahl kleiner Behältnisse, z.B. einer Mikrotiteranordnung, zeichnet sich dadurch aus, dass pro Behältnis (6) mindestens ein Mikrosensor vorgesehen ist, der unmittelbar vorgegebene Prozessgrössen ermittelt und/oder vorbestimmte Substanzen detektiert und daraus entsprechende elektrische Signale generiert. Eine nachgeschaltete Auswerte- und Steuereinheit (4, 14) aktiviert diese Mikrosensoren und empfängt/verarbeitet die von den Mikrosensoren gelieferten Signale. Zusätzlich können Heiz- oder Kühlelemente in den Behältnissen angeordnet sein, die ebenfalls von der Auswerte- und Steuereinheit (4, 14) gesteuert werden und ggf. in Abhängigkeit von Signalen der Mikrosensoren die Behältnis-Temperatur regeln. Mikrosensor und/oder Heiz/Kühlelement und/oder Teile der Auswerte- und Steuereinheit (4, 14) werden vorzugsweise in Moduln auf einem gemeinsamen Siliziumsubstrat integriert.

## Beschreibung

### Anwendungsgebiet

Die vorliegende Erfindung ist ein System für das Beobachtung von biologischen und chemischen Prozessen in kleinen Behältern, z.B. Reaktoren und Mikrotiterplatten, in miniaturisierter Form. Die Erfindung ist von besonderem Nutzen in Instrumenten für die gezielte Herstellung von biologischen und chemischen Substanzen. Sie ist insbesondere geeignet für das sog "Screening" nach katalytischen und biokatalytischen Aktivitäten, vorzugsweise in ein- oder mehrphasigen Systemen, z.B. in Enzymlösungen oder in Zellsuspensionen. Die Effizienz von Herstellungsprozessen kann erheblich gesteigert werden, indem die Prozesse selbst geregelt werden und der Erfolg schon während des Prozessablaufs beurteilt wird. Weiterhin eignet sich die Erfindung besonders für die Kontrolle von Synthese-Prozessen, bei denen die Quantifizierung der Reaktanden erschwert ist, z.B. in Mehrphasensystemen und in Ganzzell-katalysierten Prozessen.

### Stand der Technik

Enzyme und bakterielle oder eukaryotische Zellen werden häufig zur Katalyse hoch regio- und/oder stereoselektiver Reaktionen eingesetzt. Speziell in der pharmazeutischen, der Fein- und Spezialitätenchemikalien-Industrie sind hochspezifische, nebenproduktfreie und umweltfreundliche Synthesen und enantiomer-reine Produkte von wachsendem Interesse.

Bis heute sind jedoch keine universell anwendbaren, kostengünstigen Systeme zu Quantifizierung von in biokatalytischen Reaktionslösungen gebildeten oder verbrauchten Substanzen verfügbar. Speziell mehrphasigen Systeme, wie zum Beispiel Ganzzell-Suspenionen, sind aufgrund der technischen Schwierigkeiten bei Probennahme und Probenaufbereitung der Analyse häufig nur schlecht zugänglich. Insbesondere beim "Screening" nach neuen Substanzen oder katalytischen Aktivitäten in Mikrotiterplatten findet üblicherweise die Analyse zeitlich und räumlich getrennt von der eigentlichen Reaktion statt.

Prinzipiell wurde der Einsatz von Mikrosensoren im Bereich der Prozessüberwachung schon beschrieben, z.B. zeigen Hierlemann et al. in "Application-specific sensor systems based on CMOS chemical microsensors", Sensors and Actuators B, 70 (2000) pp. 2-11, ein anwendungsspezifisches Sensorsystem von verschiedenen chemischen Mikrosensoren in CMOS-Technologie. Allerdings ist die unmittelbare und direkte Auswertung einer Vielzahl von Mikrosensor-Messergebnissen darin nicht angesprochen.

Mikrosensoren selbst sind einerseits in grosser Zahl beschrieben, z.B. in M. Madou: "Fundamentals of Microfabrication", CRC Press, Boca Raton (FL) 1997 oder in R.S. Muller et al: "Microsensors", IEEE Press, New York 1991.

Sensorprinzipien andererseits sind ebenfalls in der Fachliteratur breit ausgeführt, z.B. von W. Göpel et al in "Sensors: A Comprehensive Survey". Vol. 2/3, Chemical and Biochemical Sensors, VHC-Verlagsgesellschaft. Weinheim 1991, oder in H. Baltes et al in "Sensors Updates", VCH-Wiley, Weinheim. Weitere Quellen sind J.Janata: "Principles of Chemical Sensors", Plenum, New York 1989, oder J. Janata et al: "Solid State Chemical Sensors", Academic Press, San Diego (CA) 1985.

### Die Erfindung

Es ist daher Aufgabe der Erfindung, den Ablauf von chemischen oder biologischen Prozessen unmittelbar und direkt zu überwachen, und damit die Effizienz bei der Entwicklung neuer Substanzen zu verbessern.

Diese Aufgabe löst erfindungsgemäss ein System, dass - allgemein ausgedrückt - Mikrosensoren zur Prozessüberwachung in der Weise einsetzt, dass eine Vielzahl von Mikrosensoren unmittelbar in der Prozessumgebung angeordnet und die ermittelten Sensorsignale direkt, d.h. im wesentlichen ohne zeitliche Verzögerung ausgewertet werden.

Die Erfindung konkurriert damit zu einer Vielzahl bereits etablierter Analysengeräte, wie zum Beispiel Hochdruckflüssig- oder Gaschromatographie mit Kopplung an UV/Vis oder Massenspektrometern, in Konkurrenz tritt. Das erfindungsgemässe System ist jedoch sowohl erheblich preisgünstiger als auch leistungsfähiger.

Die geeignete multiple Anordnung miniaturisierter Sensoren erlaubt es nämlich, z.B. jeden Behälter oder jede Well einer Mikrotiterplatte individuell mit einem oder mehreren Sensoren zu bestücken und so jeden einzelnen Prozess zu beobachten. Damit kann der Erfolg des Prozesses schon während des Ablaufs erkannt werden und nicht erst nach seinem Abschluss. Sowohl die gebildeten Produkte, Edukte und Intermediate als auch die Reaktionsraten können zu jedem Zeitpunkt qualitativ und/oder quantitativ erfasst werden.

Die entscheidenenden Vorteile der Erfindung können wie folgt zusammengefasst werden:
- Gleichzeitige Analyse mehrerer Ansätze durch Verwendung eines miniaturisierten Detektors, d.h. Mikrosensors.
- Entfallen der Probennahme, da die Messung direkt in der Reaktionslösung oder im Gasraum über einer Reaktionslösung durchgeführt wird.
- Die Messung kann in Echtzeit durchgeführt werden, da Probenaufbereitung und Trennung entfallen.
- Die Detektierbarkeit der Substanzen ist von deren, im Zusammenhang mit der Spektroskopie relevanten, physikochemischen Eigenschaften unabhängig.

Im einzelnen besteht ein erfindungsgemässes System aus mindestens zwei Behältnissen, die mit Feststoffen, Flüssigkeiten, oder einem Gasgemisch allein oder in Kombination gefüllt sind, und in denen chemische oder biologische Prozesse ablaufen. Pro Behältnis ist mindestens ein Mikrosensor, z.B. als Sensormodul oder in Gestalt mehrerer Sensormoduln angeordnet, der oder die bestimmte Prozessgrössen und flüssige oder gasförmige Substanzen detektieren.

Die Mikrosensoren sind mit einer Auswerte- und Steuereinheit verbunden, welche die Sensoren ansteuert, ihre Signale empfängt und verarbeitet.

Speziell können in Reaktionsgefässen, die mit Feststoffen, Flüssigkeiten, oder einem Gasgemisch allein oder in Kombination gefüllt sind, und in denen chemische oder biokatalytische Prozesse zur Stoffumwandlung ablaufen, durch die Mikrosensoren gebildete oder verbrauchte flüssige oder gasförmige Substanzen detektiert werden.

Wahlweise kann zumindest ein Teil der Auswerte- und Steuereinheit, d.h. der zugehörigen Schaltungen, in die Sensormodule integriert sein, wobei sich beispielsweise ein gemeinsames Substrat, z.B. aus Silizium anbietet.

Die Mikrosensoren bzw. Sensormoduln können nach Bedarf im Behältnis im Bereich der Gasphase oder der Flüssigkeit positioniert sein.

Wie oben bereits angedeutet, kann in jedem Sensormodul eine Mehrzahl von Mikrosensoren angeordnet sein.

Die Mikrosensoren selbst können z.B. Leitfähigkeitssensoren, massensensitive Schwingquartze, elektrochemische Zellen, katalytische Gassensoren, Festkörperelektrolytsensoren, Infrarotsensoren, Surface Acoustic Wave (SAW) Sensoren, kapazitive Sensoren, kalorimetrische Sensoren, stress- oder massensensitive Miniaturbalken, Metalloxid-Gassensoren sein, wobei diese Aufzählung nicht als abschliessend gelten soll.

Die Sensoren können als Feuchtigkeitssensor, Temperatursensor, Kohlendioxidsensor oder Drucksensor fungieren.

Wahlweise kann in mindestens einem Behältnis eine Heizquelle angeordnet sein, wobei diese sowohl getrennt ausgebildet als auch in ein Sensormodul integriert sein kann oder auch von der Auswerte- und Steuereinheit mit angesteuert werden kann.

### Beschreibung eines Ausführungsbeispiels

Nachfolgend wird ein Ausführungsbeispiel an Hand der beigefügten Zeichnungen näher beschrieben. Auf den Zeichnungen zeigen:
- Fig. 1: ein im Sinne der Erfindung typisches System;
- Fig. 2: eine Deckplatte für eine Mikrotiteranordnung mit daran angeordneten Sensormoduln;
- Fig. 3: einen Schnitt durch zwei Mikrotiterbehältnisse mit Sensormoduln;
- Fig. 4: Einzelheiten einer Deckplatte mit auswechselbaren Mikrosensoren;
- Fign. 5+6: einen weiteren Schnitt durch zwei Mikrotiterbehältnisse mit Sensormoduln und einem Heizelement; und
- Fig. 7: ein Schaltschema eines typischen Systems.

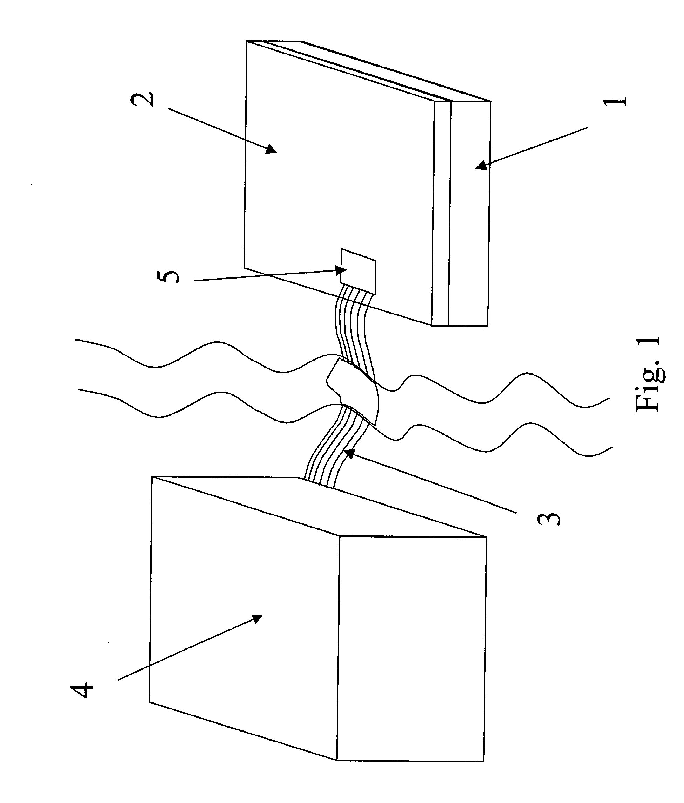

Das in Fig. 1 gezeigte typische System besteht aus einer Ansammlung von Behältnissen, in denen Reaktionen ablaufen. Die Behältnisse können z.B. auf einer Mikrotiterplatte 1 angeordnet, aber auch getrennt sein, z.B. einzelne Reagenzgläser. Eine handelsübliche Mikrotiterplatte enthält standardmässig 96 Behältnisse, jedes von beispielsweise 4x4mm Grösse. Die Behältnisse sind durch eine Deckplatte 2 abgedeckt. Diese Deckplatte enthält eine Vielzahl Sensormoduln 8, die beim Abdecken in die Behältnisse ragen und so positioniert sind, dass sie dort vorhandene gasförmige oder flüssige Substanzen detektieren oder Temperatur oder Druck messen können. Die Sensormodule 8 sind über Leitungen 3 mit einer Ansteuer- und Auswerteeinheit 4 elektrisch verbunden. Auch eine Funk-oder andere kontaktlose Verbindung ist natürlich möglich. Mikrotiterplatte 1 und Deckplatte 2 können sich in einem räumlich von der Ansteuer- und Auswerteeinheit 4 getrennten Bereich befinden, z.B. in einem Inkubator oder Wärmeschrank. Auf der Deckplatte 2 kann auch ein Multiplexer 5 angeordnet sein, mit dem zwischen den Sensormoduln für die Ansteuerung und das Auslesen geschaltet wird.

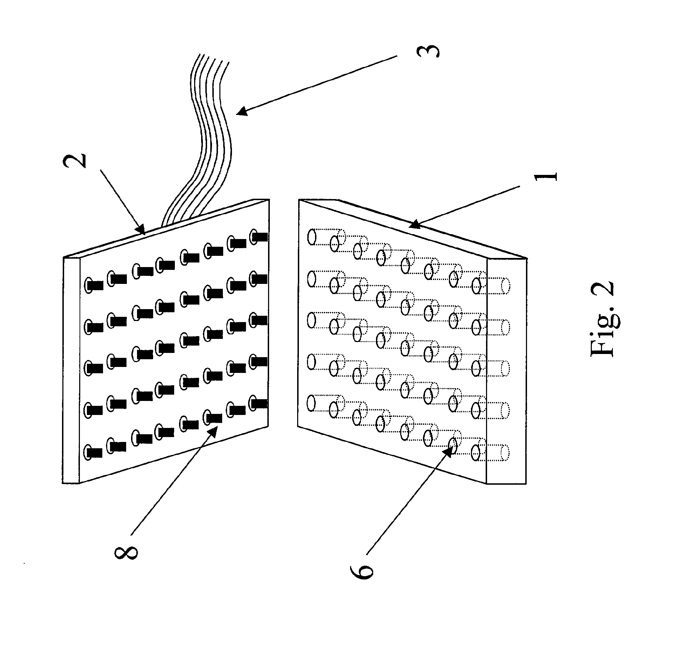

Wie in Fig. 2 dargestellt, befindet sich für jedes Behältnis 6 in der Deckplatte 2 mindestens ein Sensormodul 8. Es können jedoch auch mehrere Sensormodule für einen Behälter angordnet sein. Jedenfalls ist die Anordnung der Sensormodule 8 deckungsgleich mit der Anordnung der Behältnisse 6 in der Mikrotiterplatte 1.

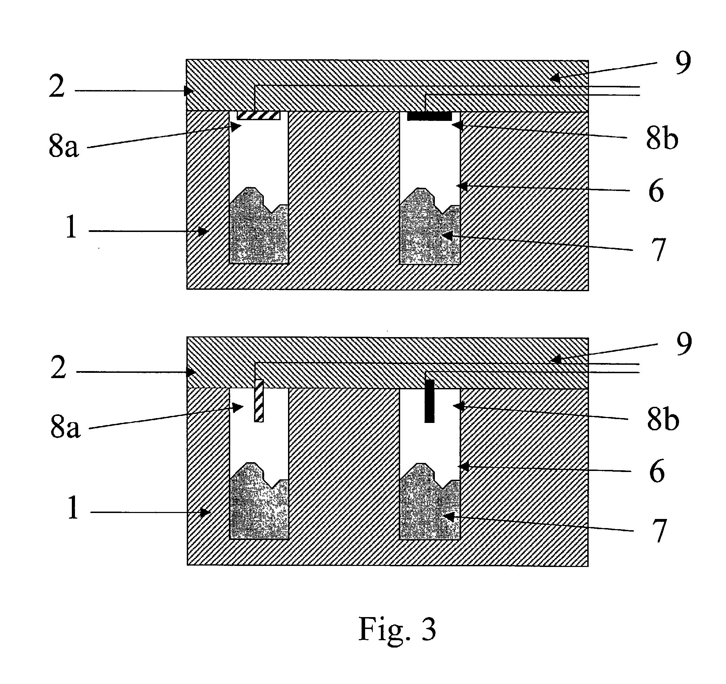

Fig. 3 zeigt die Anordnung der Sensormoduln 8a bzw. 8b in den einzelnen Behältnissen 6. Die Behältnisse haben eine Füllung 7 von Reagenzien, Lösungsmitteln und/oder oder Katalysatoren, wie z.B. Enzymen oder bakteriellen Zellen. Wie gesagt sind die Sensormoduln 8a und 8b an der Deckplatte 2 so angebracht, das sich jedem Reaktionsgefäss ein Sensormodul befindet. Dieses ist über elektrische Verbindungen 9 in der Deckplatte 2 mit der Auswerte- und Ansteuereinheit 4 verbunden, wie in Fig. 1 gezeigt. Die einzelnen Sensormodule 8a, 8b können individuell für jedes Behältnis ausgewählt werden und auch senkrecht zur Platte angeordnet sein.

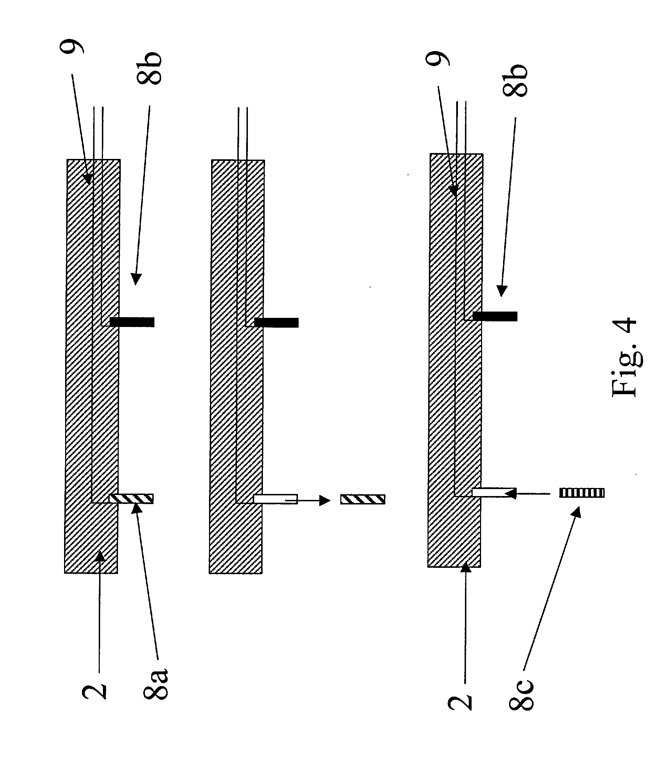

Wie in Fig. 4 gezeigt, sind die Sensormodule individuell austauschbar. Dazu sind sie mit lösbaren elektrischen Kontakten mit der Deckplatte 2 verbunden. Nach Wunsch kann so ein Sensormodul 8a entfernt und durch ein anderes Sensormodul 8c ersetzt werden. Diese Modularität des Systems erleichtert die Anpassung an die vorhandenen Bedürfnisse.

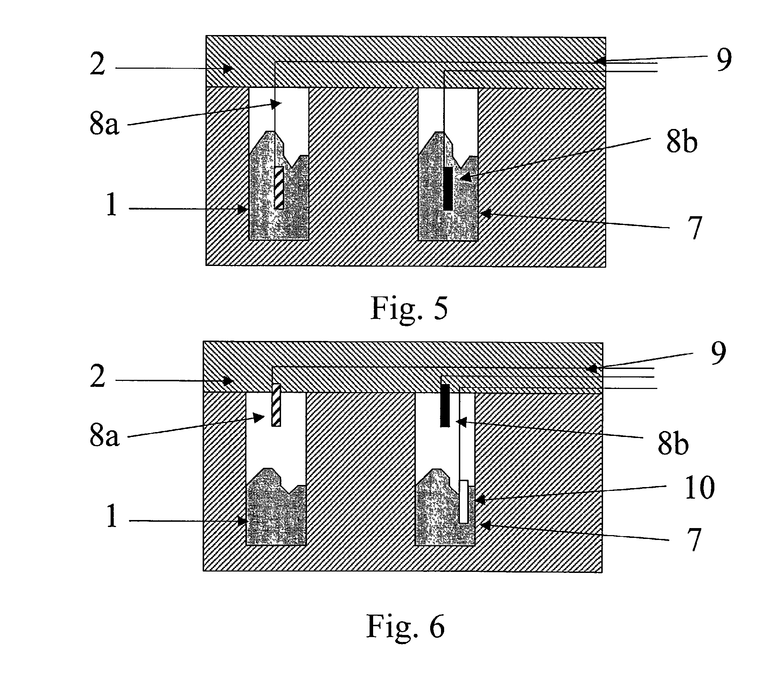

Die Sensormodule können sich auch in der Flüssigkeit in den Behältnissen befinden, wie in Fig. 5 gezeigt ist.

Wie in Fig. 6 gezeigt, kann zusätzlich zum Sensormodul 8b noch ein Heiz- oder Kühlelement 10 im Behältnis angebracht sein. Mit diesem kann die Temperatur im Behältnis geregelt werden. Auf ähnliche Art kann auch ein zweites Sensormodul im Behältnis positioniert werden.

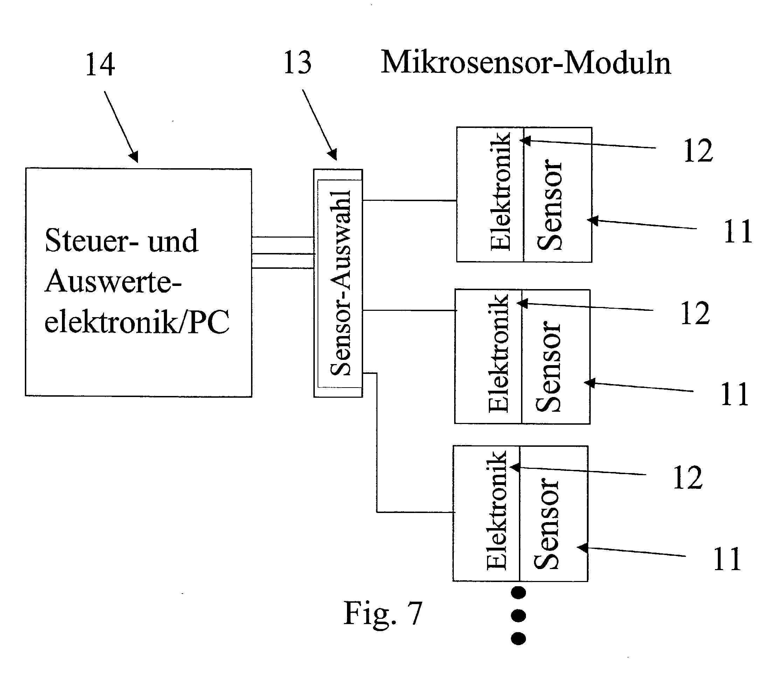

Der schaltschematische Aufbau des Systems ist Fig. 7 zu entnehmen. Die Sensormoduln enthalten einen oder mehrere Mikrosensoren 11 verschiedenster Art. Auch kann ein Teil der Ansteuer- und Auswerteelektronik schon im Sensormodul integriert sein. Über elektrische Verbindungen sind die Sensormoduln dann mit einem Auswahlelektronik 13 zur Auswahl des aktuell auszulesenden bzw. zu betreibenden Sensormoduls verbunden. Diese Auswahlelektronik 13 wiederum mündet in die Steuer- und Auswerteelektronik 14.

## Patentansprüche

1. System zur Beobachtung, Überwachung oder Steuerung von biologischen und chemischen Prozessen in einer Mehrzahl kleiner Behältnisse, **dadurch gekennzeichnet, dass**
• pro Behältnis (6) mindestens ein Mikrosensor vorgesehen ist, der so in oder an diesem Behältnis angeordnet ist, dass er unmittelbar vorgegebene Prozessgrössen ermitteln und/oder vorbestimmte Substanzen detektieren und daraus entsprechende elektrische Signale generieren kann, und
• eine Auswerte- und Steuereinheit (4, 14) vorgesehen ist, welche die Mikrosensoren aktiviert bzw. ansteuert und die von den Mikrosensoren gelieferten Signale empfängt und verarbeitet.

2. System gemäss Anspruch 1, **dadurch gekennzeichnet,**
**dass** jeder Mikrosensor Teil eines Sensormoduls (8) ist, wobei er vorzugsweise lösbar mit dem Sensormodul verbunden ist.

3. System gemäss Anspruch 2, **dadurch gekennzeichnet,**
**dass** in einem Sensormodul (8) zumindest ein Teil der Auswerte- und Steuereinheit (12) integriert ist.

4. System gemäss Anspruch 3, **dadurch gekennzeichnet,**
**dass** die Auswerte- und Steuereinheit aus auf den Sensormoduln (8) befindlichen, verteilten Schaltungsteilen (12) und einem gemeinsamen Schaltungsteil (14) besteht, wobei diese Schaltungsteile vorzugsweise über eine Sensor-Auswahlschaltung (13) miteinander verbunden sind.

5. System gemäss Anspruch 4, **dadurch gekennzeichnet,**
**dass** der auf dem Sensormodul (8) befindliche, verteilte Schaltungsteil (12) und der Mikrosensor (11) auf einem gemeinsamen Substrat, insbesondere einem Siliziumsubstrat, integriert sind.

6. System gemäss einem der Ansprüche 2 bis 5, **dadurch gekennzeichnet, dass** sich in einem Sensormodul eine Mehrzahl von Mikrosensoren und/oder Sensormodulen befinden.

7. System gemäss Anspruch 2, bei dem zumindest ein Sensormodul im Behältnis in der Gasphase positioniert ist und/oder zumindest ein Sensormodul im Behältnis in der Flüssigkeit positioniert ist.

8. System gemäss Anspruch 1, wobei mindestens einer der Mikrosensoren ein Mitglied der Gruppe Leitfähigkeitssensoren, massensensitive Schwingquartze, elektrochemische Zellen, katalytische Gassensoren, Festkörperelektrolytsensoren, Infrarotsensoren, Surface Acoustic Wave (SAW) Sensoren, kapazitive Sensoren, kalorimetrische Sensoren, stress- oder massensensitive Miniaturbalken, oder Metalloxid-Gassensoren handelt.

9. System gemäss Anspruch 1, bei dem mindestens ein Sensor ein Feuchtigkeitssensor, Temperatursensor, Kohlendioxidsensor oder Drucksensor ist.

10. System gemäss Anspruch 1 oder 2, **dadurch gekennzeichnet,**
**dass** in mindestens einem Behältnis eine Heiz- oder Kühlquelle (10) vorhanden, vorzugsweise in einem Sensormodul auf einem gemeinsamen Substrat, insbesondere einem Siliziumsubstrat, integriert ist.

11. System nach Anspruch 10, **dadurch gekennzeichnet, dass** die Heizoder Kühlquelle von der Auswerte- und Steuereinheit (4, 14) steuerbar ist.

12. System nach Anspruch 1, **dadurch gekennzeichnet, dass**
die Auswerte- und Steuereinheit (4, 14) einen Multiplexer (5) umfasst, über den die Mikrosensoren aktiviert bzw. angesteuert werden und/oder der die von den Mikrosensoren gelieferten Signale empfängt und weiterleitet.
